# EUROPEAN PATENT APPLICATION

(11) **EP 2 966 603 A1**
(43) Date of publication of application: **13.01.2016**
(21) Application number: 14176790.5
(22) Date of filing: 11.07.2014
(51) Int. Cl.: G06Q 10/06

(54) **Apparatus and method for time series data analytics marketplace**

(71) Applicant: GE Intelligent Platforms, Inc., Charlottesville, VA 22911 (US)
(72) Inventor: Courtney, Brian, Charlottesville, SC South Carolina 22911 (US); Cahalane, Ryan, Charlottesville, SC South Carolina 22911 (US); Aggour, Kareem Sherif, Charlottesville, SC South Carolina 22911 (US); Leppiaho, John C., Charlottesville, SC South Carolina 22911 (US); Mathur, Sunil, Charlottesville, SC South Carolina 22911 (US)
(74) Representative: Illingworth-Law, William Illingworth

(57) **Abstract**

A plurality of analytics 116,118 in a cloud-based environment is accessed. Each of the plurality of analytics 116,118 performs an operation on time series data. Within the cloud-based environment, a selected one or more of the plurality of analytics is chosen. A set of time series data is uploaded to the cloud-based environment and the selected one of the plurality of analytics 116,118 is optimized on that set of time series data.

## Description

### BACKGROUND OF THE INVENTION

### FIELD OF THE INVENTION

The subject matter disclosed herein relates to time series data and, more specifically, to an analytics marketplace that interacts with such data.

### BRIEF DESCRIPTION OF THE RELATED ART

Data is stored on data storage devices in a variety of different formats. Additionally, various types of data storage devices are used to store data and these data storage devices may vary in cost. In one example, data may be stored according to certain formats on high cost devices such as random access memories (RAMs). In other examples, data may be stored on low cost devices such as on hard disks.

One type of data that is stored is time series data. In one aspect, time series data is obtained by some type of sensor or measurement device and is stored as a function of time. For example, a measurement sensor may take a reading of a parameter at predetermined time intervals, and each of the measurements is stored in memory. Since large amounts of data are typically involved with time series measurements, the storage of this data becomes particularly cumbersome.

Previous systems fragment the control and organization of time series data. Put another way, the time series data is scattered at numerous locations and control is also provided at various different locations. This fragmentation in control and organization makes it difficult to control and share the information among different users of the time series data. As a result, users cannot learn or benefit from the experiences of other users. This has led to some dissatisfaction with these previous approaches.

### BRIEF DESCRIPTION OF THE INVENTION

The approaches described herein provide approaches by which public and private contributors can build and publish analytics for time series data, and other users can discover, evaluate and tune the performance of those time series analytics in a cloud-based network environment. In other aspects, the present approaches provide a platform that allows users to subscribe to optimized instances of those analytics that then run in their local environments.

In many of these embodiments, a plurality of analytics in a cloud-based environment is accessed. Each of the plurality of analytics performs an operation on time series data. Within the cloud-based environment, a selected one or more of the plurality of analytics is chosen. A set of time series data is uploaded to the cloud-based environment and the selected subset of the plurality of analytics is optimized on the set of time series data. If of high enough accuracy, an end user may choose to subscribe to the optimized analytic(s) and pay to run them in their local production environment on their production time series data.

In other aspects, a copy of the selected one or more of the plurality of optimized analytics is obtained and the copy is run in a local environment. In still other aspects, performance data of the analytic is obtained from the local environment.

In other examples, an additional analytic is added to the plurality of analytics by the community of analytic developers found within the marketplace owners and/or maintainers. In yet other examples, an additional analytic is added to the plurality of analytics by a third party analytic developer, who may have no direct relationship to the marketplace owners and/or maintainers.

In other aspects, selected ones of the plurality of analytics are subscribed to by a user. In still other aspects, the performance of analytics is monitored and reported to other users such as the developers of the analytics.

In many of these embodiments, an apparatus that is configured to utilize time series data to tune analytics in a cloud-based environment and then execute them locally includes an interface and a controller. The interface has an input and an output.

The controller is coupled to the interface and is configured to access a plurality of analytics in a cloud-based environment. Each of the plurality of analytics performs an operation on time series data. The controller is further configured to, within the cloud-based environment, choose a selected one of the plurality of analytics. The controller is further configured to upload a set of time series data to the cloud-based environment via the input and to optimize the selected one of the plurality of analytics on the set of time series data.

In other aspects, the controller is further configured to provide a copy of a user- selected subset of the plurality of optimized analytics to deploy in a local environment for production execution. In still other aspects, the controller is further configured to receive performance data from of the analytic(s) in the local environment.

In other examples, the controller is configured to add an additional analytic to the plurality of analytics where the analytic is supplied by the community of analytic developers found within the marketplace owners and/or maintainers. In yet other examples, an additional analytic is added to the plurality of analytics by a third party analytic developer, who may have no direct relationship to the marketplace owners and/or maintainers.

In other aspects, the controller is further configured to receive subscriptions via the input, the subscriptions subscribing to a selected subset one of the plurality of analytics. In some other aspects, the controller is further configured to monitor the performance of the analytics.

### BRIEF DESCRIPTION OF THE DRAWINGS

For a more complete understanding of the disclosure, reference should be made to the following detailed description and accompanying drawings wherein:
FIG. 1 comprises a block diagram of a time series data analytics marketplace according to various embodiments of the present invention;
FIG. 2 comprises a flowchart for implementing a time series data analytics marketplace according to various embodiments of the present invention; and
FIG. 3 comprises a block diagram for implementing a time series data analytics marketplace according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### DETAILED DESCRIPTION OF THE INVENTION

The approaches described herein provide a cloud-based analytics marketplace whereby users (e.g., data scientists) can upload analytics and models that run on time series data. End users can anonymously upload their own personal time series data to a cloud-based network and use that data to train or optimize the performance of one or more of the analytics and/or models. After the training/optimization process is complete, each analytic generates performance results such as overall accuracy and true and false-positive rates.

If a user accepts or likes the performance results, they can choose to subscribe to that analytic. When a user subscribes to an analytic, the analytic is automatically enabled in their environment to run on their local time series data. In this way, the end user does not have to worry about data privacy concerns such as the fear of having their data hacked while being processed in the cloud-based network. The analytic will be able to run in the local environment of an end user for as long as they subscribe to the analytic.

In another aspect, the present approaches collect performance information about the instance of an analytic that is deployed in their local environment. At any time the end user is also allowed to upload new time series data into the cloud environment to retune the analytics to which they have subscribed. In some aspects, if a subscription of a user ends then the analytic automatically expires and will no longer run. In the instances where end users provide performance information back to the cloud environment, the analytic builders can use that feedback to further optimize their analytics. Consequently, the present approaches provide an infrastructure by which analytics development can be crowd-sourced across a community of analytics builders (e.g., data scientists and analytic model builders), and similarly the analytics evaluation and feedback can be crowd-sourced across a community of analytics users.

Many institutions and users are at least somewhat hesitant to move their proprietary data and computing infrastructure into the cloud for fear of data theft and other security concerns. The present approaches allow institutions and users to take advantage of cloud-based services for testing and evaluating analytics on their own unique datasets, with the indirect service and assistance of a team of analytic builders (e.g., data scientists) with whom their normal operations may not justify a formal, standing relationship. At the same time, the subscribed analytics run in production locally so that there is no need to continuously load private data into a remote, cloud-based infrastructure.

In other aspects, end users have the ability to analyze and optimize a wide array of analytics and determine which ones they believe meet their needs. This particular advantage gives the end users access to a potentially very large library of time series analytics with which to experiment. Further, the ability to try or test an analytic before the analytic is purchased is especially attractive to end users who do not have a large research budget or access to a pool of data scientists to draw from, to mention a few examples.

Once the decision has been made on what analytics to use, those analytics can be seamlessly deployed in the local computing environment of an end user. And if the preferred analytics are too intensive for the local execution environment of the end user, the cloud-based platform provides a flexible alternative to run, for example, central processing unit (CPU) and memory-intensive analytics on large volumes of time series data directly in the cloud.

The analytics can also be improved over time based on feedback relating to the analytic performance within the user's environment without having to obtain the actual data used, maintaining privacy. As feedback is provided by a large number of end users, the platforms provided by the present approaches enable a crowd-sourced approach to providing feedback on analytics and how to improve them, giving the data scientists and other analytic builders powerful insights to iterate over and evolve their analytics.

In yet another advantage, the analytics marketplace provided by the approaches described herein is a very cost-effective environment for data scientists and other analytics builders to submit analytics which could then be subscribed to by paying end users. In the present approaches, the most useful analytics are easily identified and those that do not prove useful to customers could be retired or restructured. This allows analytic builders to have a clear understanding of and focus attention on those analytics that are truly profitable.

For end users (e.g., users that use the analytics in production environments), another benefit of these approaches is that they can scale their costs (their expenditures from running the analytics, in particular) based on the value those analytics are generating. In other words, there is not a significant front-loaded investment requiring amortization. Such a marketplace also allows participation of users (e.g., expert users) in evaluating results and making recommendations. Moderators could provide feedback on analytic performance results and advise end users, giving the end users access to communities of experts they might not be able to keep on staff. A large community of analytic builders, testers and end users would likely reduce overall support costs, and enable crowd-sourced support.

On the front end of a system, end users will be able to upload historical time series data samples (along with any associated metadata), and use that historical data set to tune or optimize a specific analytic or analytics to their unique dataset. If the user is satisfied with the final accuracy of the analytic or analytics, they can then choose to subscribe to one or more of them. These analytics can then run in their local infrastructure (or directly within the hosted environment) against their time series data. The user would be able to subscribe and pay per time period (e.g., per month) or per execution of each analytic, with optional abilities to report on the analytic performance in their chosen environment.

In the back-end of the system (e.g., a side that is not accessible to the ultimate consumers and is, for example, accessible by network control personnel and operators), data scientists and other experts can build and publish new analytics for users to evaluate and use. Those experts may be internal employees within an organization, for instance, building a library of analytics for subscription, or could be third parties who provide new analytics into the marketplace and profit when their analytics are used.

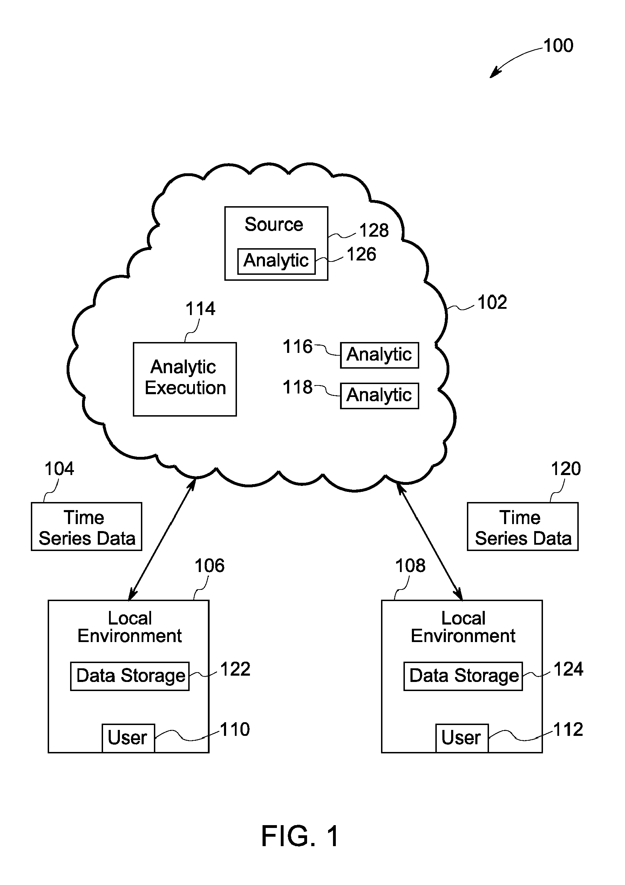

Referring now to FIG. 1, a system that provides a marketplace for time series data analytics is described. The system 100 includes a cloud-based network 102, a first local environment 106 (with a first user 110), and a second local environment 108 (with a second user 112). The cloud-based network 102 may be any network or combination of networks such as cellular phone networks, the Internet, wide area networks, and local area networks. The first local environment 106 and the second local environment 108 may include any type of network or combination of networks as well. The first local environment 106 and the second local environment 108 may include servers, computers, processers, or other types of electronic equipment that implement some of the functions described herein. In one example, the first local environment 106 and the second local environment 108 are local area networks. The first local environment 106 and the second local environment 108 are electronically coupled (e.g., wired or wirelessly) to the cloud-based network 102.

The cloud-based network 102 includes an analytic execution engine 114, a first analytic 116, and a second analytic 118. The first analytic 116 and a second analytic 118 are analytics that operate on time series data. Examples of analytics include linear regression interpolation, and anomaly detection. Other examples of analytics are possible. The analytic execution engine 114, the first analytic 116, and the second analytic 118 may be implemented as computer instructions running on a general purpose processing device. First time series data 104 may be produced and stored at the first local environment 106 (e.g., at a first data storage device 122) and the second time series data 120 may be produced and stored at the second local environment 108 (e.g., at a second data storage device 124).

In one example of the operation of the system of FIG. 1, the first analytic 116 and a second analytic 118 in the cloud-based network 102 are accessed, for example, by the first user 110 from the first local environment 106. Each of the first analytic 116 and a second analytic 118 performs an operation on time series data. Within the cloud-based environment of the cloud based network 102, one or both of the first analytic 116 and a second analytic 118 is chosen. A set of time series data (e.g., the first time series data 104) is uploaded to the cloud-based network 102 and the selected one of the plurality of analytics (e.g., one or both of the first analytic 116 and a second analytic 118) is optimized on the set of time series data.

In other aspects, a copy of the selected one of the plurality of optimized analytics (e.g., optimized versions of the first analytic 116 and a second analytic 118) is obtained and the copy is run in a local environment (e.g., the first local environment 106 or the second local environment 108). In other aspects, performance data of the analytic (e.g., the first analytic 116 or the second analytic 118) is obtained from the local environment (e.g., the first local environment 106 or the second local environment 108).

In other examples, an additional analytic (e.g., a third analytic 126) is added to the plurality of analytics from a separate source 128 and the separate source 128 operates within the cloud-based network 102. In other examples, an additional analytic (e.g., a third analytic 126) is added to the plurality of analytics (the first analytic 116 and a second analytic 118) from a separate source and the separate source operates externally to the cloud-based environment (e.g., it is outside the cloud-based network 102).

In yet other examples, one or more of the plurality of analytics (e.g., the first analytic 116 and a second analytic 118) are subscribed to by a user (e.g., the first user 110 or the second user 112). In other aspects, the performance of analytics (the first analytic 116 and a second analytic 118) is monitored and reported to other users (e.g., the first user 110 or the second user 112). Feedback can also be provided from the first user 110 or the second user 112 as they execute instances (copies) of analytics to the cloud-based network 102 so that the first analytic 116 and the second analytic 118 can be fine-tuned.

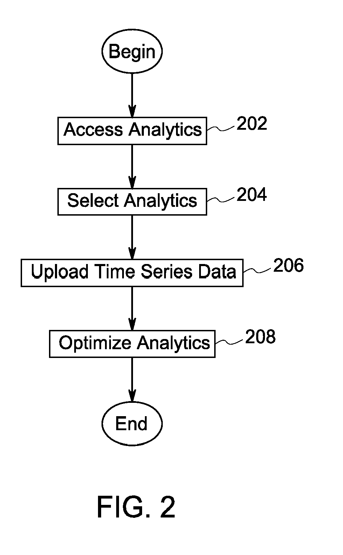

Referring now to FIG. 2, one approach for creating a time series data analytics marketplace is described. At step 202, a plurality of analytics in a cloud-based environment is accessed. Each of the plurality of analytics performs an operation on time series data. At step 204 and within the cloud-based environment, a selected one of the plurality of analytics is chosen. At step 206, set of time series data is uploaded to the cloud-based environment and at step 208 the selected one of the plurality of analytics is optimized on the set of time series data.

In other aspects, a copy of the selected one of the plurality of optimized analytics is obtained and the copy is run in a local environment. In other aspects, performance data of the analytic is obtained from the local environment.

In other examples, an additional analytic is added to the plurality of analytics by the community of analytic developers found within the marketplace owners and/or maintainers. In yet other examples, an additional analytic is added to the plurality of analytics by a third party analytic developer, who may have no direct relationship to the marketplace owners and/or maintainers.

In other examples, the plurality of analytics are subscribed to by a user. In other aspects, the performance of analytics is monitored and reported to analytics builders.

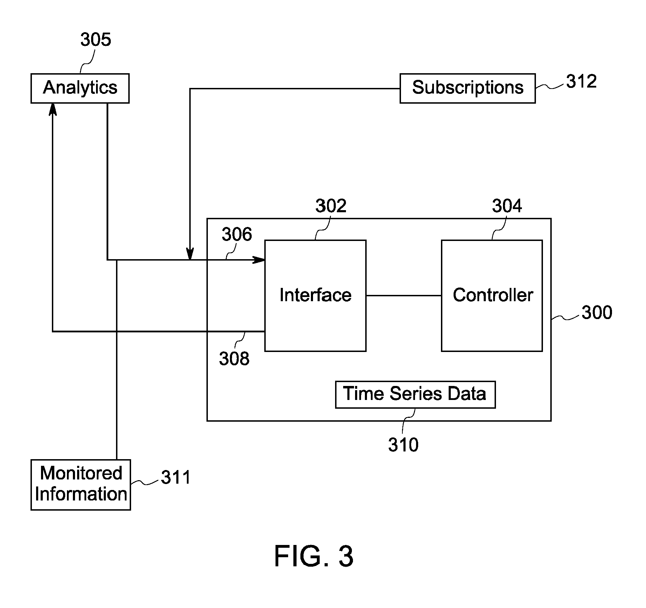

Referring now to FIG. 3, an apparatus 300 that is configured to utilize time series data to tune analytics in a cloud-based environment and then execute them locally includes an interface 302 and a controller 304. The interface 302 has an input 306 and an output 308. The apparatus 300 may be any combination of hardware or software elements and in one example includes programmed instructions that operate on a general purpose processing device. In one example, the apparatus 300 implements some or all of the functions of the analytic execution engine 114 of FIG. 1 and is disposed at a cloud-based network. Other examples of placement of the apparatus 300 or possible. Furthermore, it will be appreciated that the functions of the apparatus 300 may be separated and spread across multiple locations or devices.

The controller 304 is coupled to the interface 302 and is configured to access a plurality of analytics 305 in a cloud-based environment via the output 308. Each of the plurality of analytics 305 performs an operation on time series data 310. The controller 304 is further configured to, within the cloud-based environment, choose a selected one of the plurality of analytics 305 via the output 308. The controller 304 is further configured to upload the time series data 310 to the cloud-based environment via the input 306 and to optimize the selected one of the plurality of analytics 305 on the set of time series data.

In other aspects, the controller 304 is further configured to obtain a copy of the selected one of the plurality of optimized analytics 305 and send this copy to a local environment for execution via the output 308. In still other aspects, the controller 304 is further configured to receive performance data of the instance of the analytic in a local environment at the input 306.

In other examples, the controller 304 is configured to add an additional analytic to the plurality of analytics where the analytic is supplied by the community of analytic developers found within the marketplace owners and/or maintainers. In yet other examples, an additional analytic is added to the plurality of analytics by a third party analytic developer, who may have no direct relationship to the marketplace owners and/or maintainers.

In other aspects, the controller 304 is further configured to receive subscriptions 312 via the input 306, the subscriptions 312 subscribing to the selected one of the plurality of analytics. In some other aspects, the controller 304 is further configured to monitor the performance of analytics and receive monitored information 311 at the input 306 and report the monitored information to users via the output 308.

It will be appreciated by those skilled in the art that modifications to the foregoing embodiments may be made in various aspects. Other variations clearly would also work, and are within the scope and spirit of the invention. The present invention is set forth with particularity in the appended claims. It is deemed that the spirit and scope of that invention encompasses such modifications and alterations to the embodiments herein as would be apparent to one of ordinary skill in the art and familiar with the teachings of the present application.

## Claims

1. A method of utilizing time series data to tune analytics in a cloud-based environment and then execute them locally, the method comprising:
accessing a plurality of analytics in a cloud-based environment, each of the plurality of analytics performing an operation on time series data;
within the cloud-based environment, choosing a selected one or more of the plurality of analytics;
uploading a set of time series data to the cloud-based environment and optimizing the selected one or more of the plurality of analytics on the set of time series data.

2. The method of claim 1, further comprising obtaining a copy of the selected one or more of the plurality of analytics and running the copy in a local environment.

3. The method of claim 1 or claim 2, further comprising obtaining performance data of the selected one of the plurality of analytics in the local environment.

4. The method of any preceding claim, further comprising adding an additional analytic to the plurality of analytics from a separate source, the separate source operating within the cloud-based environment.

5. The method of any preceding claim, further comprising adding an additional analytic to the plurality of analytics, the additional analytic being supplied by one of a community of analytic developers found within a marketplace of marketplace owners, a community of analytic developers found within a marketplace of marketplace maintainers, or a third party developer.

6. The method of any preceding claim, further comprising subscribing to the selected one or more of the plurality of analytics.

7. The method of any preceding claim, further comprising monitoring a performance of the analytics and reporting it to the analytics builders.

8. An apparatus that is configured to utilize time series data to tune analytics in a cloud-based environment and then execute them locally, the apparatus comprising:
an interface with an input and an output;
a controller, the controller coupled to the interface and configured to access a plurality of analytics in a cloud-based environment, wherein each of the plurality of analytics performing an operation on time series data, the controller further configured to, within the cloud-based environment, choose a selected one or more of the plurality of analytics, the controller further configured to upload a set of time series data to the cloud-based environment and optimize the selected one or more of the plurality of analytics on the set of time series data.

9. The apparatus of claim 8, wherein the controller is further configured to obtain a copy of the selected one of the plurality of analytics and send it to a local environment for execution.

10. The apparatus of claim 8 or claim 9, wherein the controller is further configured to receive performance data of the analytic from the local environment.

11. The apparatus of any of claims 8 to 10, wherein the controller is configured to add an additional analytic to the plurality of analytics from a separate source, the separate source operating within the cloud-based environment.

12. The apparatus of any of claims 8 to 11, wherein the controller is configured to add an additional analytic to the plurality of analytics, the additional analytic being supplied by one of a community of analytic developers found within a marketplace of marketplace owners, a community of analytic developers found within a marketplace of marketplace maintainers, or a third party developer.

13. The apparatus of any of claims 8 to 12, wherein the controller is further configured to receive subscriptions via the input, the subscriptions subscribing to the selected one or more of the plurality of analytics.

14. The apparatus of any of claims 8 to 13, wherein the controller is further configured to monitor the performance of analytics and reporting it to analytics builders.
